# FASCICULE DE BREVET EUROPEEN

(11) **EP 2 317 762 B1**
(45) Date de publication et mention de la délivrance du brevet: **19.08.2015**
(21) Numéro de dépôt: 10187124.2
(22) Date de dépôt: 11.10.2010
(51) Int. Cl.: H04N 5/64, H04N 5/225, H04N 5/247, G12B 9/02, G06F 1/16

(54) **Ecran video à ouverture laterale et connexions intérieures**
Videomonitor mit lateraler Offnungsmöglichkeit und innenliegenden Anschlüssen
Video screen with lateral opening possibility and interior connections

(30) Priorité: 12.10.2009 FR 0957114; 10.06.2010 US 353628 P
(43) Date de publication de la demande: 04.05.2011
(73) Titulaire: Transvideo, 27135 Verneuil sur Avre (FR)
(72) Inventeur: Delacoux, Jacques, 28270 RUEIL LA GADELIERE (FR)
(74) Mandataire: Ilgart, Jean-Christophe

(56) Documents cités:
- FR-A1- 2 810 411
- US-A1- 2001 047 126
- US-A1- 2008 198 255

## Description

### DOMAINE TECHNIQUE ET ART ANTÉRIEUR

L'invention concerne le domaine des écrans vidéo, notamment des écrans moniteurs pouvant être utilisés avec des caméras, telles que celles utilisés sur des sites de tournage de films à l'air libre ou en studio.

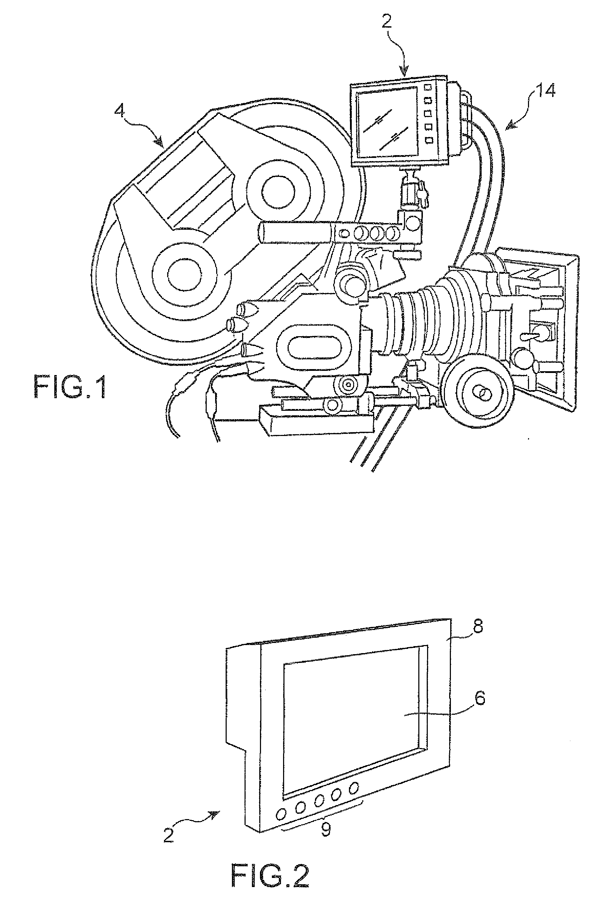

La figure 1 représente une utilisation classique d'un tel écran vidéo 2 couplé à une caméra 4. La caméra permet de visualiser une scène et de l'enregistrer sur un support tel qu'une bobine de film. Dans de nombreux cas, il est important de disposer d'un écran de visualisation annexe 2, ou écran vidéo ayant une fonction de moniteur, qui permet de visualiser la scène en cours de tournage.

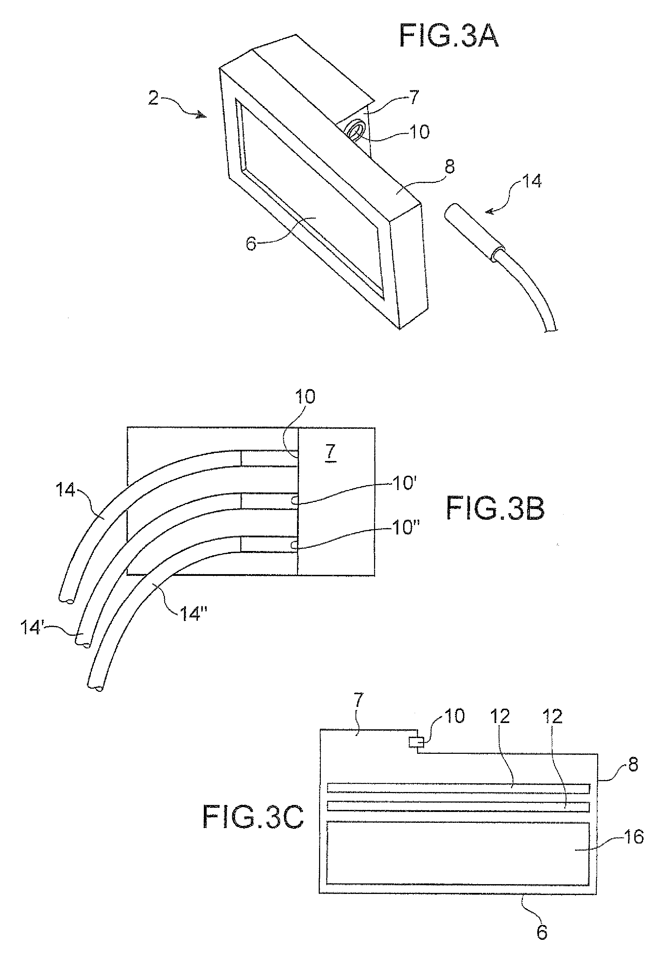

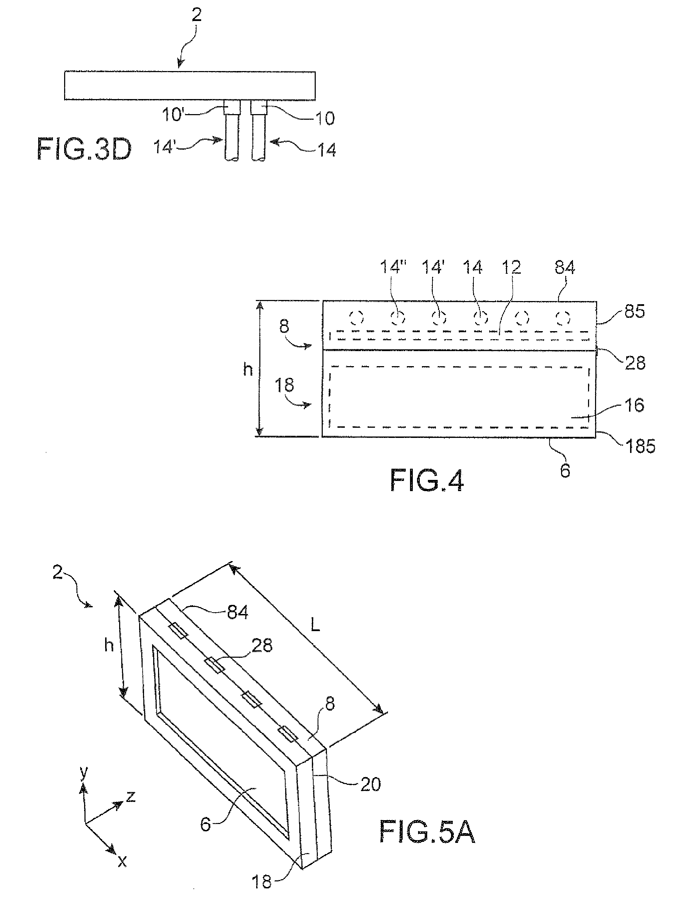

Les figures 2, 3A - 3D représentent schématiquement l'aspect extérieur d'un tel écran vidéo, la référence 6 désignant la fenêtre de visualisation et la référence 8 le coffret du moniteur vidéo. Plus précisément, les figures 3A, 3B et 3C sont des vues en perspective, de derrière et de dessus d'un même écran. La figure 3D est une vue de dessus d'un autre type d'écran.

Sur la figure 3C sont représentés des composants de l'écran logés dans le coffret 8 **:** il s'agit essentiellement de cartes 12 de traitement de signal et d'une matrice 16 à cristaux liquides qui permet de former l'image à partir des signaux élaborés et traités par les cartes 12.

L'écran 2 lui-même est assez plat (figure 3A), il dispose de connexions 10, 10', 10" en général en face arrière (figures 3A - 3D), pour être relié à un ou des câbles 14, 14', 14". Ces moyens de connexion et ces câbles permettent notamment de transmettre des signaux de la caméra 4 à l'écran 2.

Un écran de forme particulière peut comporter un caisson 7, en face arrière du dispositif, comme illustré sur les figures 3A - 3C, ce qui permet de réaliser des connexions latérales des câbles 14, c'est-à-dire dans un plan sensiblement parallèle au plan de l'écran.

On connaît d'autres types d'écrans vidéo, qui ne comportent pas ce genre de caisson arrière, et pour lesquels la connexion des câbles 14 est réalisée de manière perpendiculaire au plan de l'écran, comme sur la figure 3D.

De tels câbles 14 sont également représentés sur la figure 1, lors de l'utilisation de l'écran. De manière claire, ils représentent une gêne pour tout opérateur situé à proximité du dispositif et ce d'autant plus que, compte tenu de la rigidité de la fixation et du rayon de courbure des câbles, ils s'étendent, selon la configuration arrière de l'écran, avec ou sans caisson 7, suivant une direction latérale, ou suivant une direction perpendiculaire à l'écran, de manière assez large au-delà des limites de cet écran, comme on le comprend d'après le schéma de la figure 3B.

La figure 3D représente l'autre type d'écran, en vue de dessus, avec une fixation des câbles perpendiculairement à l'écran, et on voit que le câble 14 a une extension très importante en arrière de l'écran.

En outre, quelle que soit sa forme en face arrière, un tel écran est souvent muni, en face avant, à côté de l'écran d'affichage lui-même, des boutons de réglage 9. L'écran est en outre muni de boutons 9 de réglage qui permettent de régler notamment la qualité de l'image visualisée.

Or, de tels boutons ne sont pas forcément toujours nécessaires lors de l'utilisation d'un tel écran. Certains, comme par exemple le bouton marche/arrêt, ne sont actionnés qu'en début et en fin d'utilisation. En cours d'utilisation, par exemple lorsque l'écran est monté sur une caméra comme cela est représenté en figure 1, certains de ces boutons ne sont pas utiles. Il ne s'agit pas seulement du bouton marche/arrêt, mais aussi de certains boutons de commande de certains types de réglage permettant par exemple de configurer des outils de mesure, des repères graphiques d'aide au positionnement ou encore des paramétrages techniques du moniteur lui-même.

Tant les câbles que les boutons posent un problème d'encombrement, dans un environnement qui est souvent limité par la place. En effet, autour de l'écran, et des appareils auxquels il peut être associé, un ou plusieurs opérateurs peuvent être amenés à se déplacer. Ils peuvent être gênés, dans leurs mouvements, par la présence des câbles 14, 14', 14". Ceux-ci posent par conséquent des problèmes d'encombrement et peuvent provoquer d'éventuels accrochages avec des personnes ou des objets divers.

En outre, la présence de boutons 9 en face avant rend l'orientation ou la manipulation de l'écran malaisée, puisqu'il faut éviter de toucher des boutons déjà réglés. Or de telles manipulations sont fréquentes: comme on peut le concevoir d'après le schéma de la figure 1, il faut pouvoir tourner l'écran autour d'un axe, vertical et/ou horizontal, afin de l'orienter différemment, par exemple pour des raisons d'ensoleillement, ou pour montrer une image à une ou plusieurs personnes situées à côté de l'opérateur.

Enfin, dans un souci d'efficacité, certains opérateurs préfèrent avoir une zone la plus dénuée que possible d'accessoires, boutons de réglage et autres commutateurs afin de ne conserver que l'essentiel, l'image sur laquelle ils travaillent.

Un problème est donc de trouver un nouveau système de positionnement de divers accessoires situés autour de l'écran 6, et notamment les câbles et les boutons.

Par ailleurs, on comprend à la vue des figures 3B et 3D, que les câbles positionnés en face arrière occupent une partie de la surface arrière extérieure du dispositif et ne laissent libre qu'une faible partie de celle-ci. Or, il serait souhaitable de pouvoir utiliser toute cette surface, et en particulier d'ajouter, contre cette face arrière, des dispositifs annexes tels que par exemple une ou plusieurs batteries. Compte tenu de l'existence des câbles, la taille des batteries est nécessairement limitée dans la configuration actuelle.

Un autre type de problème sur ce genre d'écran est celui du refroidissement de l'électronique et de l'afficheur. Un écran de moniteur, tel que celui des figures 1-3D doit être compact, mais doit en plus intégrer des moyens de refroidissement de l'électronique embarquée. Ce problème est d'autant plus important que le moniteur possède un écran à forte luminosité.

Or l'utilisation de ventilateurs mécaniques est prohibée dans de nombreux environnements à cause du bruit produit. Par ailleurs l'utilisation de performations destinées à ventiler l'intérieur du produit permettrait l'infiltration de liquides ou de poussières à l'intérieur du produit. Il est donc utile de disposer de grandes surfaces à usage de dissipation thermique par convection naturelle.

Encore un autre type de problème est celui des chocs et/ou encrassements des connecteurs qui peuvent se produire en cas de chute du dispositif : les extrémités des câbles et leurs moyens de connexion 10, 10', 10" ne sont alors pas protégés. Ils ne sont pas protégés non plus, lors d'intempéries (pluie, grêle, neige...) .

Les documents US2001/0047126 et US2008/0198255 décrivent des dispositifs de visualisation comportant un écran et un boitier formé par 2 parties pliables l'une sur l'autre.

### EXPOSÉ DE L'INVENTION

L'invention concerne d'abord un dispositif de visualisation, selon la revendication 1.

L'invention permet d'abriter les connexions des câbles, à l'intérieur du boîtier. Cela évite des problèmes que pose l'exposition de l'extrémité du câble en présence d'humidité ou de pluie, comme cela peut être souvent le cas lors d'une utilisation à l'extérieur, hors abri.

D'autres modes de réalisation sont compris dans les revendications 2 - 14.

### BRÈVE DESCRIPTION DES DESSINS

- La figure 1 représente un écran vidéo monté sur une caméra,
- les figures 2 et 3A-3D représentent diverses vues de l'aspect extérieur d'un écran vidéo, de face et de dos,
- les figures 4 et 5A - 5D représentent diverses vues d'un écran selon l'invention,
- la figure 6 illustre un exemple d'un écran selon l'invention, avec ses câbles,
- les figures 7A - 7D représentent diverses vues d'un autre écran selon l'invention,
- la figure 8 illustre encore un autre exemple d'un écran selon l'invention,
- La figure 9 représente un écran vidéo selon l'invention monté sur une caméra,
- Les figures 10 - 11C représentent des variantes d'un écran vidéo selon l'invention,
- La figure 12 représente un écran vidéo selon l'invention monté sur un support en forme de U,

### EXPOSÉ DÉTAILLÉ DE MODES DE RÉALISATION PARTICULIERS

Les figures 4, 5A-5C et 6 représentent divers aspects d'un écran plat selon un mode de réalisation de la présente invention ainsi que divers composants qui y sont logés.

Les dimensions h et L représentées à la figure 5A sont fonction de la taille de la matrice utilisée et d'une façon générale les plus approchantes de ces dimensions. D'une manière générale, cet écran présente une profondeur p assez faible par rapport à ses autres dimensions dans le plan XY. La profondeur p, est variable en fonction des équipements inclus dans le moniteur.

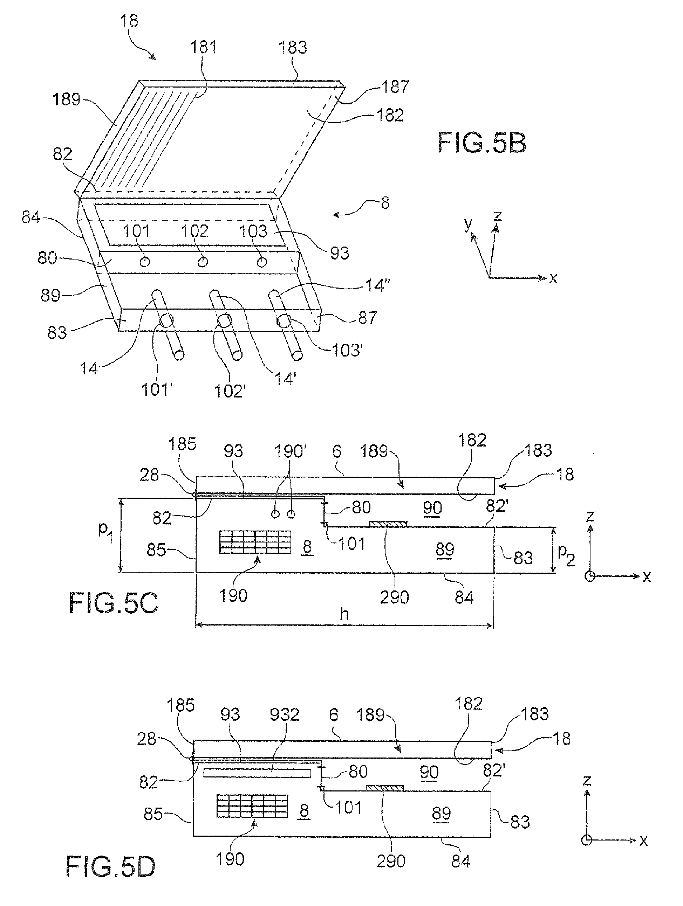

Sur chacune de ces figures, on voit que le dispositif 2 comporte deux parties 18, 8, dites respectivement partie avant et partie arrière, qui sont en position fermée sur les figures 4, 5A et 5C. La référence 20 désigne la ligne de fermeture des deux parties, lorsqu'elles sont appuyées l'une sur l'autre. Ces deux parties 8, 18 sont en position ouverte sur la figure 5B.

Des moyens tels qu'une charnière 28 permettent de réaliser l'ouverture du boîtier, en maintenant jointes les deux parties 8, 18 par un de leur côté 85, 185. La position ouverte du dispositif est représentée en figure 5B, sur laquelle on voit aussi que l'un des côtés 83 de la partie arrière 8 du boîtier comporte au moins une ou plusieurs ouvertures 101' , 102', 103' de passage d'un câble 14, 14' , 14''.

Dans la charnière 28 passent en outre les câbles ou les fils électriques, et/ou une ou des gaines qui contiennent ces câbles ou fils. On peut ainsi connecter les fonctions électriques ou électroniques de la partie arrière 8 et celles de la partie avant 18. C'est ainsi qu'on peut relier électriquement des moyens 12 de traitement de signaux, de préférence sous forme d'une ou plusieurs cartes électroniques, disposés dans la partie arrière 8 et les moyens 16, 6 d'affichage, par exemple une matrice 16 à cristaux liquide qui permet d'afficher une image à partir des signaux élaborés par ces moyens 12 de traitement du signal. Dans certains cas, il peut y avoir une ou plusieurs cartes dans la partie avant du dispositif. Mais, de préférence, il n' y a aucune de ces cartes 12 dans la partie avant 18 afin de réduire d'autant les besoins en dissipation thermique.

Sur les figures 4 et 5C, qui sont respectivement des vues de dessus et de côté du dispositif, on voit que la face arrière 84 n'est pas encombrée par un caisson tel que le caisson 7 des figures 2-3A. Elle est plane, et ne comporte aucune connexion pour un ou plusieurs câbles, elle peut donc être utilisée avec profit pour d'autres applications. Elle peut en particulier être munie de moyens pour fixer un ou des équipement(s) complémentaire(s), par exemple une batterie.

Cette face arrière 84 du dispositif constitue également la face arrière de la partie arrière 18, dont la face avant est constitué de plusieurs surfaces désignées par les références 82, 80, 82'.

La partie avant 18 du dispositif comporte une face arrière 182 qui, en position fermée (comme sur les figures 4 et 5C), fait face à la face avant 82, 82' de la partie arrière, et est disposée sensiblement parallèlement aux surfaces 82, 82'.

Les deux surfaces 82, 82' comportent chacune une portion de plan, disposée parallèlement à un plan défini par la surface arrière 84, et donc au plan XY. Mais ces deux portions de plan sont disposées à des hauteurs différentes suivant l'axe Z, perpendiculaire au plan XY et également plan défini par la surface arrière 84. Si l'on prend le plan 84 comme plan de référence, la surface 82 est disposée à une hauteur p1 tandis que la surface 82' est disposé à une hauteur p2 < p1, par exemple p2 = 0, 5 p1.

Ces deux portions forment un profil en marche d'escalier (voir figure 5C), elles sont reliées l'une à l'autre par une surface 80, disposée sensiblement parallèlement au plan XY et sensiblement perpendiculairement à chacune des surfaces 82, 82'. Suivant l'axe X cette surface 80 est par exemple située sensiblement à mi-largeur du dispositif, par exemple à une distance h/2 du côté extérieur 85 du dispositif, qui est dans cet exemple le côté sur lequel la charnière 28 est appliquée. Elle est dirigée sensiblement perpendiculairement à la surface de l'écran lorsque le dispositif est en position fermée (voir de nouveau la structure de la figure 5C).

L'une des surfaces, ici désignée par la référence 82, est donc celle qui est située, en position fermée du dispositif, au plus près de la face arrière 182 de la partie avant 18. En fait elle est même sensiblement au contact de cette face arrière 182, tandis qu'un espace 90 est maintenu entre la surface 82' et la face 182.

La surface arrière 84 est donc parallèle à chacune des surfaces 82, 82' mais aussi à la surface 182 lorsque l'écran est en position fermée (figure 5C).

La surface 80, dite de connexion, est munie d'un ou plusieurs moyens 101, 102, 103,... pour recevoir des câbles 14, 14' , 14'' (voir figure 5B) de manière à ce que ceux-ci, ou au moins leur portion d'extrémité située du côté des moyens 101, 102, 103,... s'étendent, lorsqu'ils sont connectés, dans un plan parallèle au plan du dispositif. Ces moyens peuvent être en nombre quelconque, par exemple supérieur ou égal à 2 ou compris entre 2 et 15, par exemple encore 3 ou 5 ou 10. Ces moyens sont les parties femelles de connecteurs dont les parties mâles sont à l'extrémité des câbles. En variante, ces moyens sont les parties mâles de connecteurs dont les parties femelles sont à l'extrémité des câbles. Cette surface 80 forme donc bien une zone de connexion, disposée située à l'intérieur du moniteur, entre la partie avant 18 et la partie arrière 8.

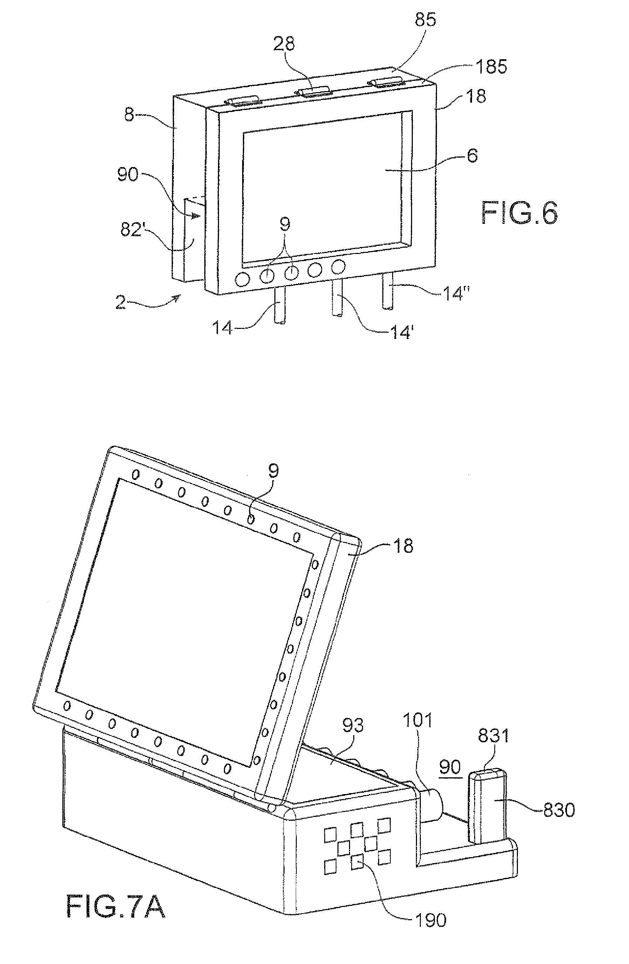

En position fermée du dispositif, les surfaces 182, 80 et 82' définissent un volume ou un espace 90 apte à recevoir une portion d'extrémité de un ou plusieurs des câbles 14, 14' , 14'' . La portion de ces câbles située à proximité des moyens 101, 102, 103,... est alors située dans cet espace 90 entre la face arrière 182 de la partie avant et la surface 82'. Les câbles pénètrent dans le dispositif 2 par une face latérale 83 de la partie arrière, de manière à arriver par-dessous l'écran lorsque celui-ci est en position d'utilisation, représentée en figure 6. C' est de préférence la face opposée à celle sur laquelle les moyens 28 sont disposés : ceux-ci permettent, comme indiqué ci-dessus, de maintenir jointes les deux parties 8, 18 par leurs côtés 85, 185, ces deux côtés formant, en position fermée du dispositif, une de ses faces latérales. La face latérale 83, par laquelle les câbles pénètrent dans le dispositif 2, est opposée, ou sensiblement parallèle, à ces côtés 85, 185 et à cette face latérale lorsqe le dispositif est en position fermée. Si ces derniers forment la partie supérieure du dispositif en cours d'utilisation (comme par exemple représenté en figure 6), la face 83 par laquelle les câbles pénètrent est la face inférieure du dispositif.

Cette disposition permet une architecture compacte, sans fil disposé de manière gênante comme sur la figure 3B ou 3D.

Avantageusement, dans un dispositif selon l'un quelconque de ses modes de réalisation, la partie avant comporte des moyens de dissipation thermique et/ou la partie arrière comporte des moyens d'isolation thermique et/ou de dissipation thermique.

La partie 82 de la face avant peut être recouverte d'une couche 93 (figure 5B et 5C) d'un matériau isolant thermiquement, par exemple en téflon (PTFE), contribuant à éviter un couplage thermique entre la partie avant 18 et la partie arrière 8.

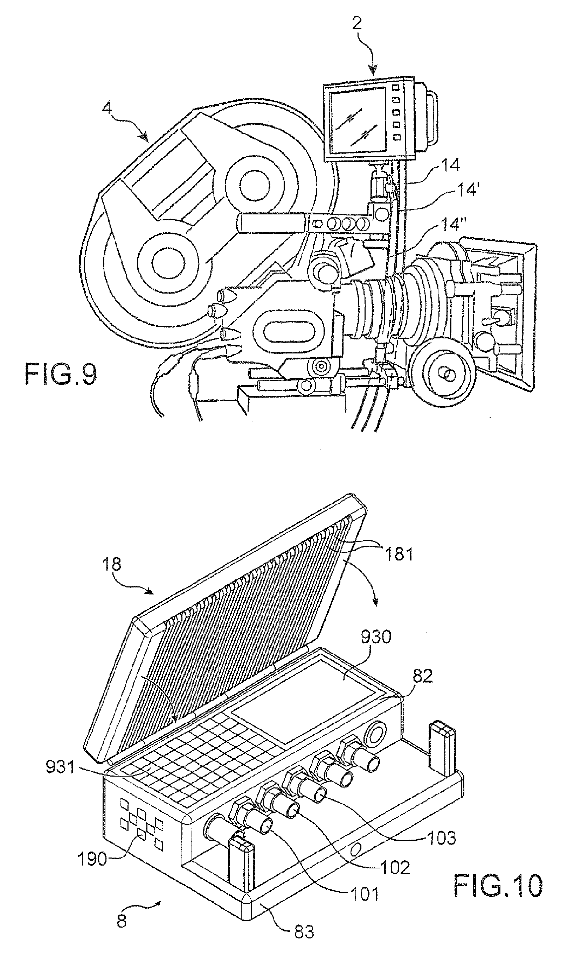

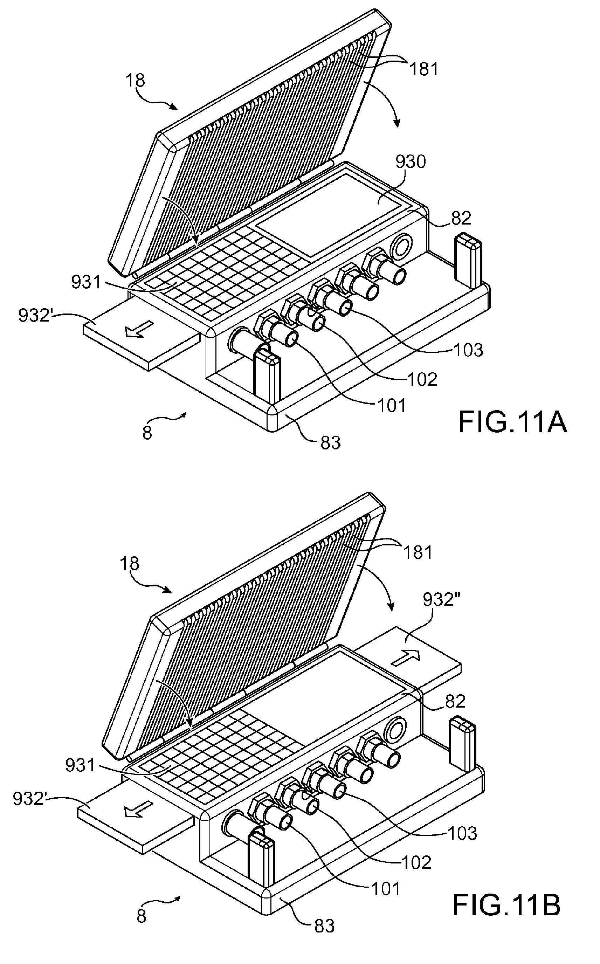

En variante, comme expliqué plus loin et comme illustré en figure 10, cette partie 82 peut comporter un écran 930, par exemple de type tactile, et/ou un clavier 931. En variante encore, un écran 932, par exemple un écran tactile, et/ou un clavier latéral peut aussi être prévu pour une sortie latérale par l'un des côtés 87, 89, par exemple sous l'action de moyens de type ressort qui éjectent cet écran après poussée de l'utilisateur ou déverrouillage par celui ci. L'écran est alors en position ouverte, dans un plan sensiblement parallèle au plan de la surface 82. Cet écran est représenté en position fermée sur la figure 5D, en position ouverte en figure 11A. Deux écrans peuvent être prévus pour une position de sortie latérale, par chacun des côtés 87, 89 (figure 11B).

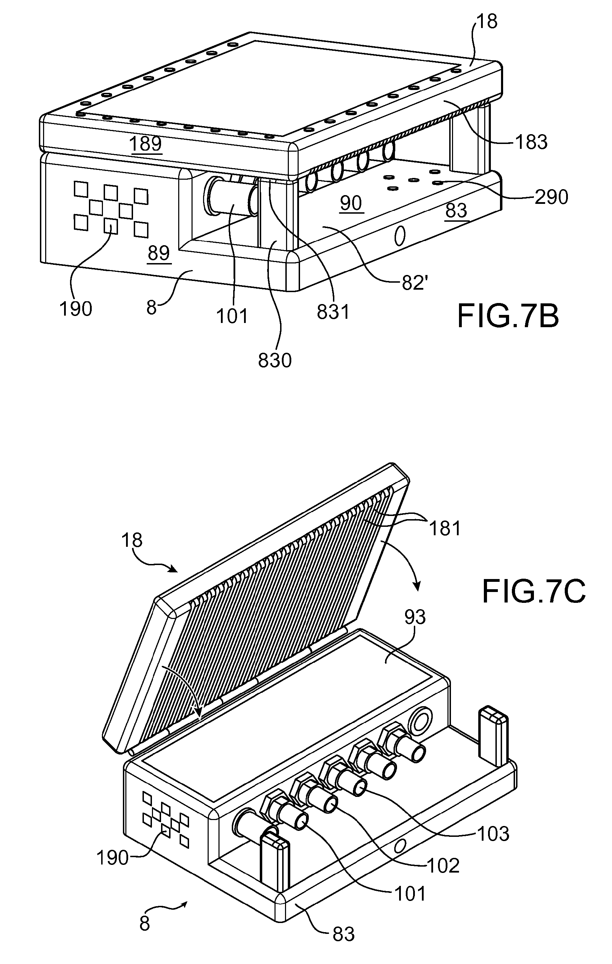

La face arrière 182 de la partie avant 18 peut être structurée avec des nervures 181 (figure 5B sur laquelle seule une partie de ces nervures est représentée, mais aussi figure 7C) pour former une surface de dissipation thermique. Est ainsi favorisé un refroidissement de cette partie avant, qui peut chauffer du fait des moyens électroniques et des moyens d'affichage 16, 6. Ce refroidissement est assuré par convection naturelle, notamment grâce à la présence de la cavité ou de l'espace 90, sans ventilation mécanique forcée : le dispositif ne nécessite pas de moyes mécaniques de ventilation.

Les faces latérales 85, 87, 89, de la partie arrière 8 sont dirigées sensiblement perpendiculairement à la surface de l'écran en position fermée (figures 5B et 5C) et des touches de contrôle ou des boutons de réglage de fonctions de l'écran peuvent être disposés sur ces faces latérales. Des boutons ou des moyens de réglage manuel peuvent aussi être disposés dans le dispositif, par exemple sur la surface intérieure 82' de la partie arrière.

Des touches ou boutons de contrôle 9 peuvent aussi être disposés autour de la surface de visualisation (figure 6), mais ce n'est pas une obligation. On peut aussi ne disposer, en face avant, que les seules touches ou boutons dont un opérateur a besoin en cours d'utilisation du dispositif, les autres étant disposés soit sur une ou des faces latérales 83, 85, 87, 89 de la partie arrière (comme les boutons 190, 190' de la figure 5C ou des figures 7A et 7B), et/ou sur une ou des faces latérales 183, 187, 189 de la partie avant 18 et/ou sur une des surfaces 82', 182 (comme les boutons 290 de la figure 5C ou de la figure 7B). Eventuellement aucune touche n'est disposée en face avant de la partie avant, toutes les touches étant situées à l'intérieur du dispositif, autour de l'espace 90, et/ou sur des faces latérales.

Selon une mode de réalisation, au moins un bouton de réglage peut être disposé l'intérieur du boîtier et/ou sur une partie latérale de celui-ci.

Des moyens de fermeture pour maintenir les deux parties avant et arrière du dispositif 2 en position fermée peuvent êtres disposés sur la partie avant 18 et/ou arrière 8. Par exemple, une portion de la partie avant 18 peut être en matériau métallique tandis qu'au moins un des bords latéraux 87, 89 de la partie arrière 8 est munie de moyens magnétiques permettant de maintenir ces deux parties en contact l'une avec l'autre. D'autres moyens de fermeture peuvent être réalisés par exemple des verrous, ou un système à encliquetage ou un autre moyen mécanique permettant de conserver le maintien et la cohésion de l'ensemble pendant l'utilisation, une première partie de ces moyens étant disposée sur la partie avant 18 du dispositif, une deuxième partie sur la partie arrière 8 du dispositif, ces première et deuxième parties coopérant pour assurer le maintient des deux parties de l'écran 2 en contact l'une avec l'autre, en position fermée, et pour permettre une ouverture de ces deux parties. La charnière 28 peut être freinée par un dispositif mécanique de friction afin d'opposer une résistance à l'ouverture et à la fermeture.

En figures 7A - 7D est représentée une variante, sur laquelle des montants ou plots 830, 830' disposés perpendiculairement à la surface 82' sont munis, à leurs extrémités respectives, d'une portion magnétique 831, 831', destinée à coopérer avec une partie métallique située dans la partie avant 18 de l'appareil pour attirer celle-ci et réaliser ainsi une fermeture. L'opérateur n' a ensuite qu' à exercer des forces en sens inverses l'une de l'autre, sur la partie avant 18, et simultanément sur la partie arrière, pour ouvrir l'ensemble. La figure 7C représente le mouvement de fermeture.

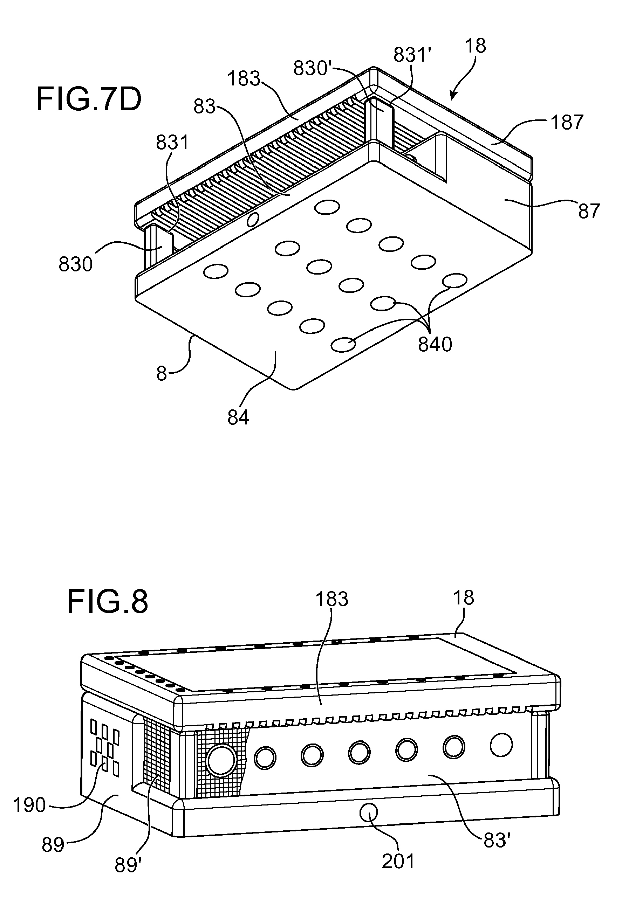

Selon la variante des figures 7A - 7D, les portions latérales 83, 87, 89 de la partie arrière 8 peuvent être ajourées, par exemple pour laisser passer des câbles, ou complètement ouvertes. Cette configuration favorise le refroidissement du dispositif, notamment par le contact entre l'air ambiant et la face arrière 182 de la partie avant 18. Selon une autre variante encore, représentée en figure 8, ces parties latérales ne sont pas totalement ouvertes, mais protégées par une ou plusieurs grilles ou parois 89', 83' pour laisser passer l'air tout en filtrant les particules ou les poussières portées par l'atmosphère et pouvant avoir tendance à être transportée vers l'intérieur du dispositif. La paroi latérale 83' est en outre munie des orifices correspondants 101', 102', 103' pour laisser passer des câbles, comme sur les figures 5B, 5C.

Un ou plusieurs pieds ou supports peuvent être introduits par les orifices pratiqués dans le boîtier pour les câbles. Un tel pied ou support peut être creux, et être même traversé par un câble, afin de dissimuler plus encore les moyens de connection.

Dans la partie latérale inférieure 83, un pied ou support peut être introduit par un orifice 201 pratiqué dans le boîtier. Un tel pied ou support peut être creux, auquel cas un câble peut être glissé à l'intérieur.

Comme on le voit sur ces diverses figures, un mode de réalisation préféré est celui dans lequel l'ouverture et la fermeture du dispositif se font par rotation des deux parties avant et arrière, l'une par rapport à l'autre, autour d'un axe défini par les charnières 28 disposées sur l'un des côtés du dispositif.

On voit en figure 7D que la face plane arrière 84 est de préférence libre de toute connexion ou touche. Elle peut comporter au moins un trou 840 et/ou au moins un alésage fileté permettant de fixer un ou des accessoires. Elle peut être utilisée pour fixer mécaniquement un ou des moyens périphériques et/ou un ou plusieurs autres équipements, par exemple une ou des batteries. Par exemple une batterie est fixée à l'aide de vis dans un emplacement prévu à cet effet ou au moyen de supports mécaniques venant eux mêmes se fixer aux différents emplacements prévus à cet effet à l'arrière du moniteur. Ces batteries, en général assez lourdes, permettent de stabiliser le dispositif dans certaines configurations, principalement celles où le moniteur vient agir comme contre-poids dans un système autonome équilibré pour annuler les actions de la pesanteur. Cette face arrière peut donc être munie de moyens de fixation permettant de rendre solidaire le moniteur d'un système comportant la camera, les moyens d'équilibrage et de support du tout, ces moyens de fixation offiront éventuellement la possibilité d'ajuster la position relative du moniteur dans le système.

Dans un dispositif selon l'invention, les connexions des câbles étant disposées à l'intérieur du boitier, elles sont protégées, notamment des chocs et de l'encrassement ou des intempéries. Mais, également, les départs de câbles sont protégés et guidés vers le bas du moniteur, dégageant la face arrière 84 qui peut dissiper de la chaleur produite par exemple par les composants électronique et/ou offrir une large zone de fixation.

Un dispositif selon l'invention a de préférence une face arrière libre de connexion, cette face arrière peut donc évacuer la chaleur de manière plus efficace. La surface de dissipation peut d'ailleurs être augmentée par un usinage ou l'utilisation d'un profil adéquat.

Le moniteur peut indifféremment être utilisé dans les deux sens, incluant des fonctions de retournement de l'image, ce qui présente un intérêt, pour la protection des câbles et la possibilité de conserver des surfaces importantes de refroidissement.

Un tel moniteur selon l'invention est destiné à afficher des images issues de sources diverses ou de dispositifs de prise de vue divers, dans des applications de terrain. L'appareil est par exemple tenu à la main, fixé à une caméra ou sur tout système de prise de vue, porté sur le corps dans des systèmes créés pour compenser les effets de la gravité tout en permettant à l'opérateur des déplacements fluides ou indépendant, comme des grues ou systèmes mobiles, motorisés ou non.

Un moniteur selon l'invention peut être utilisé comme expliqué ci dessus en liaison avec la figure 1, avec une caméra 4. La direction verticale des câbles 14, 14', 14" ne pose plus les problèmes d'encombrement et de gêne indiqués en introduction comme on le voit sur la figure 9.

Lorsqu'un dispositif selon l'invention est dans sa position fermée (il s'agit notamment de la position représentée en figures 5C, 6, 7B, 7D, 8), la face avant et l'écran 6 du dispositif et sa face arrière 84 sont sensiblement parallèles entre elles.

Dans les divers modes de réalisation présentés, on peut avantageusement utiliser la surface 82 (surface qui fait partie de la face avant de la partie arrière du dispositif, comme déjà expliqué ci dessus) pour positionner un écran 930 et/ou un clavier 931. Ceci est illustré en figure 10.

Un écran 932, par exemple un écran tactile, et/ou un clavier latéral peut aussi être prévu pour une sortie latérale, par exemple sous l'action de moyens de type ressort qui éjecte cet écran après poussée de l'utilisateur ou déverrouillage par celui ci.

La figure 11A représente un tel mode de réalisation incorporant ces différents éléments, avec écran tactile ou clavier 932 en position de sortie latérale.

La figure 11B représente une autre variante, avec deux écrans tactiles 932', 932" en position de sortie latérale.

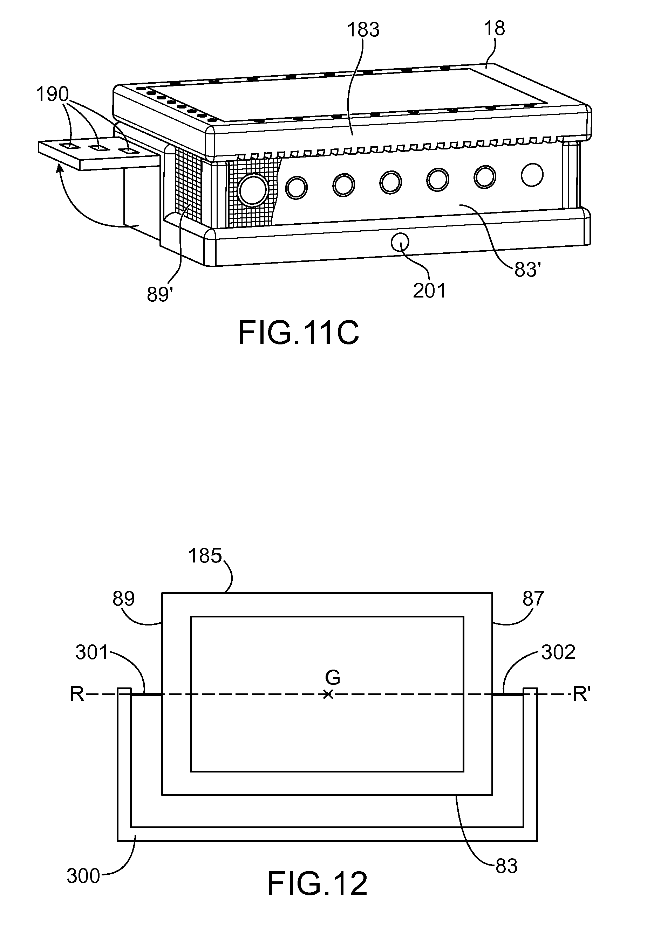

Selon encore une autre variante, illustrée en figure 11C, une partie latérale du dispositif peut pivoter pour venir dans le plan de la surface 82, ou dans un plan parallèle à cette surface 82. Cette partie latérale est par exemple celle qui porte les boutons de commande 190, qui peuvent être aussi incorporés dans une zone de type écran tactile.

Enfin, un écran selon l'invention est avantageusement positionné sur un support 300 en U, comme illustré en figure 12, avec un axe de rotation RR' passant par le centre de gravité G de l'écran. Des moyens, par exemple un trou taraudé, sont prévus à cette fin dans chaque partie latérale 87, 89 du dispositif pour y insérer des éléments de maintien 301, 302 sur cet axe RR'.

## Revendications

1. Dispositif (2) de visualisation, comportant un écran de visualisation (6), un boîtier (8, 18), des moyens (12) pour produire sur l'écran une image provenant d'un dispositif de prise de vue, **caractérisé en ce que** :
- le boîtier comporte une première partie (18), dite avant, et une deuxième partie (8), dite arrière,
- la première partie comportant une face arrière (182) interne au boîtier, la deuxième partie comportant une face avant interne au boîtier comportant plusieurs parties (82, 82'), dont une partie (82') forme, avec ladite face arrière (182), un espace (90) interne au boîtier lorsque celui-ci est dans une position fermée, ledit espace étant délimité sur un de ses côtés par une surface (80) reliant les deux parties (82, 82'), dite surface de connexion, comportant au moins un moyen de connexion (101, 102, 103) d' un câble (14, 14', 14"),
- des moyens (830, 831) pour fermer ou pour ouvrir le boîtier, en éloignant ou en rapprochant ladite deuxième partie (8), dite arrière, de ladite première partie (18), dite avant, en maintenant jointes les deux parties (8, 18) par un de leurs côtés (85, 185), ces deux côtés (185, 85) formant une même face du boîtier lorsque celui-ci est en position fermée,
- une partie latérale (83) du boitier, opposée à la face (85) de la deuxième partie, comportant en outre au moins une ouverture (101', 102', 103') de passage d'au moins un câble (14, 14', 14") destiné à être raccordé à un des moyens de connexion (101, 102, 103).

2. Dispositif selon la revendication 1, les moyens pour fermer ou pour ouvrir le boîtier permettant une rotation de la partie avant et de la partie arrière du boîtier, autour d'un axe sur l'un des côtés du boîtier.

3. Dispositif selon la revendication 1 ou 2, les moyens pour fermer ou pour ouvrir le boîtier comportant au moins une charnière (28) sur au moins une face latérale (85, 185) du boîtier.

4. Dispositif selon l'une des revendications 1 à 3, au moins un bouton de réglage (190, 190', 290) étant disposé à l'intérieur du boîtier (18, 8) ou à l'intérieur de l'espace (90) interne au boîtier (18, 8) et/ou sur une partie ou une face latérale (83, 87, 89) ou interne (82', 182) de celui-ci.

5. Dispositif selon l'une des revendications 1 à 4, la face arrière (182) de la première partie (18), dite avant, comportant en outre des moyens (181) de dissipation thermique et/ou la face avant (82) de la deuxième partie (8), dite arrière, comportant en outre des moyens (93) d'isolation thermique.

6. Dispositif selon l'une des revendications 1 à 5, les moyens (28) pour fermer ou ouvrir le boîtier comportant ou contenant des moyens de liaison électrique entre la première partie (18), dite avant, et la deuxième partie (8), dite arrière.

7. Dispositif selon l'une des revendications 1 à 6, la deuxième partie (8), dite arrière, contenant des moyens (12) pour traiter un signal pour produire une image sur l'écran (6).

8. Dispositif selon l'une des revendications 1 à 7, des faces latérales (83, 87, 89) de la deuxième partie (8), dite arrière, étant ajourées, ou complètement ouvertes.

9. Dispositif selon l'une des revendications 1 à 8, la face arrière (84) de la deuxième partie comportant des moyens (840) pour fixer des moyens périphériques, par exemple au moins une batterie.

10. Dispositif selon l'une des revendications 1 à 9, les moyens pour fermer ou pour ouvrir le boîtier permettant une rotation de la première partie et de la deuxième partie du boîtier, autour d'un axe défini par des charnières (28) disposées sur l'un des côtés (85, 185) du boîtier.

11. Dispositif selon l'une des revendications 1 à 10, ladite face avant (82) de la deuxième partie (8) comportant au moins un deuxième écran (930) et/ou un clavier (931).

12. Dispositif selon l'une des revendications 1 à 10, comportant en outre au moins un deuxième écran et/ou clavier (932, 932', 932", 830) rétractable en position fermée dans le boîtier (8, 18), et pouvant être en position ouverte au-delà d'une face latérale (87, 89) du dispositif.

13. Dispositif selon la revendication 12, la position fermée du deuxième écran et/ou clavier (932, 932', 932", 830) étant une position parallèle à l'un des faces (87, 89) du boîtier, ce deuxième écran et/ou clavier étant monté en position de rotation autour d'un axe parallèle à une desdites faces.

14. Equipement cinématographique, éventuellement numérique, comportant une caméra (4) et un dispositif selon l'une des revendications 1 à 13.

## Patentansprüche

1. Anzeigevorrichtung (2) mit einem Bildschirm (6), einem Gehäuse (8, 18) und Mitteln (12) zum Wiedergeben eines von einer Bildaufnahmevorrichtung stammenden Bildes auf dem Bildschirm, **dadurch gekennzeichnet, dass**
- das Gehäuse einen ersten Abschnitt (18), vorderer Abschnitt genannt, und einen zweiten Abschnitt (8), hinterer Abschnitt genannt, aufweist, die aufeinander geklappt werden können,
- wobei der erste Abschnitt eine innerhalb des Gehäuses liegende Hinterseite (182) aufweist, der zweite Abschnitt eine innerhalb des Gehäuses liegende Vorderseite mit zwei Teilen (82, 82') aufweist, von denen nur ein Teil (82') einen Raum (90) innerhalb des Gehäuses bildet, wenn dieses in geschlossener Stellung ist, wobei der Raum auf der einen Seite von einer Fläche (80), der sogenannten Verbindungsfläche, begrenzt wird, welche die beiden Teile (82, 82') verbindet und zumindest ein Anschlussmittel (101, 102, 103) zum Anschließen eines Kabels (14, 14', 14") aufweist,
- sowie Mittel (830, 831) zum Verschließen bzw. Öffnen des Gehäuses, indem der zweite, hintere Abschnitt (8), von dem ersten, vorderen Abschnitt (18) entfernt bzw. diesem angenähert wird, indem die beiden Abschnitte (8, 18) über eine ihrer Seitenflächen (85, 185) aneinandergehalten werden, wobei diese beiden Seiten (185, 85) ein und dieselbe Seite des Gehäuses bilden, wenn dieses in geschlossener Stellung ist,
- wobei ein Seitenteil (83) des Gehäuses, welches der Seitenfläche (85) des zweiten Abschnitts entgegengesetzt ist, ferner zumindest eine Öffnung (101', 102', 103') zum Durchführen zumindest eines Kabels (14, 14', 14") aufweist, das an eines der Verbindungsmittel (101, 102, 103) angeschlossen werden soll.

2. Vorrichtung nach Anspruch 1, wobei die Mittel zum Verschließen bzw. Öffnen des Gehäuses eine Drehung des vorderen Abschnitts und des hinteren Abschnitts des Gehäuses erlauben, um eine Achse an einer der Seitenfläche des Gehäuses.

3. Vorrichtung nach einem der Ansprüche 1 oder 2, wobei die Mittel zum Verschließen bzw. Öffnen des Gehäuses zumindest ein Scharnier (28) an zumindest einer Seitenfläche (85, 185) des Gehäuses aufweisen.

4. Vorrichtung nach einem der Ansprüche 1 bis 3, wobei zumindest ein Einstellknopf (190, 190', 290) im Inneren des Raums (90), der innerhalb des Gehäuses (18, 8) liegt, und/oder an einer Seitenfläche (83, 87, 89) oder Innenfläche (82', 182) desselben angeordnet ist.

5. Vorrichtung nach einem der Ansprüche 1 bis 4, wobei die Hinterseite (182) des ersten, vorderen Abschnitts (18) ferner Mittel (181) zur Wärmeableitung aufweist und/oder die Vorderseite (82) des zweiten, hinteren Abschnitts (8) ferner Mittel (93) zur Wärmedämmung aufweist.

6. Vorrichtung nach einem der Ansprüche 1 bis 5, wobei die Mittel (28) zum Verschließen bzw. Öffnen des Gehäuses Mittel zur elektrischen Verbindung zwischen dem ersten, vorderen Abschnitt (18) und dem zweiten, hinteren Abschnitt (8) aufweisen bzw. enthalten.

7. Vorrichtung nach einem der Ansprüche 1 bis 6, wobei der zweite, hintere Abschnitt (8) Mittel (12) zum Verarbeiten eines Signals enthält, um auf dem Bildschirm (6) ein Bild wiederzugeben.

8. Vorrichtung nach einem der Ansprüche 1 bis 7, wobei die Seitenflächen (83, 87, 89) des zweiten, hinteren Abschnitts (8) durchbrochen bzw. vollständig geöffnet sind.

9. Vorrichtung nach einem der Ansprüche 1 bis 8, wobei die Hinterseite (84) des zweiten Abschnitts Mittel (840) zum Befestigen von Peripherievorrichtungen, beispielsweise zumindest einer Batterie, aufweist.

10. Vorrichtung nach einem der Ansprüche 1 bis 9, wobei die Mittel zum Verschließen bzw. Öffnen des Gehäuses eine Drehung des ersten Abschnitts und des zweiten Abschnitts des Gehäuses um eine Achse herum gestatten, die von Scharnieren (28) definiert wird, die an einer der Seitenflächen (85, 185) des Gehäuses angeordnet sind.

11. Vorrichtung nach einem der Ansprüche 1 bis 10, wobei die Vorderseite (82) des zweiten Abschnitts (8) zumindest einen zweiten Bildschirm (930) und/oder eine Tastatur (931) aufweist.

12. Vorrichtung nach einem der Ansprüche 1 bis 10, ferner enthaltend zumindest eine(n) zweite(n) Bildschirm und/oder Tastatur (932, 932', 932", 830), der/die in Schließstellung in das Gehäuse (8, 18) einschiebbar ist und in Offenstellung über eine Seitenfläche (87, 89) der Vorrichtung hinausstehen kann.

13. Vorrichtung nach Anspruch 12, wobei die Schließstellung des/der zweiten Bildschirms und/oder Tastatur (932, 932', 932", 830) eine Stellung parallel zu einer der Seiten (87, 89) des Gehäuses ist, wobei diese(r) zweite Bildschirm und/oder Tastatur in Drehstellung um eine parallel zu der einen Seite verlaufenden Achse angebracht ist.

14. Kinematographische, gegebenenfalls digitale Einrichtung mit einer Kamera (4) und einer Vorrichtung nach einem der Ansprüche 1 bis 13.

## Claims

1. A viewing device (2) including a viewing screen (6), a casing (8, 18), means (12) for producing an image on the screen from a motion picture camera device, **characterized in that**:
- the casing includes a first portion (18), a so-called front portion, and a second portion (8), a so-called rear portion,
- the first portion including a rear face (182) internal to the casing, and the second portion including a front face, internal to the casing comprising several parts (82, 82'), a part (82') of which forms, with said rear face (182), a gap (90) internal to the casing when it is in a closed position, said gap being delimited on one of its sides by a surface (80), connecting said two parts (82, 82'), a so-called connecting surface, including at least one connection means (101,102,103) of a cable (14, 14', 14"),
- means (830, 831) for closing or for opening the casing, by moving said second portion (8), a so-called rear portion, away from or closer to said fist portion (18), a so-called front portion, while maintaining both of these portions (8, 18) attached to each other through two of their respective sides (85, 185), these two sides (85, 185), forming a face of the casing in the closed position of the latter,
- a side portion (83) of the casing, opposite to said face (85) of the second portion, further including at least one opening (101', 102', 103') for letting through at least one cable (14, 14', 14") intended to be connected to connection means (101,102,103).

2. The device according to claim 1, the means for closing or for opening the casing allowing a rotation of the front portion and of the rear portion, around an axis on one of the side portions of the casing.

3. The device according to claim 1 or 2, the means for closing or for opening the casing including at least one hinge (28) on at least one of the side portions (85, 185) of the casing.

4. The device according to any of claims 1 to 3, at least one adjustment button (190, 190', 290) being positioned inside the casing (18, 8) or inside the gap (90) internal to the casing (18, 8) and/or on a side portion or a side face (83, 87, 89) or on an internal portion or face (82', 182) of the latter.

5. The device according to any of claims 1 to 4, the rear face (182) of the first portion (18), the so-called front portion, further including heat dissipation means (181) and/or the front face (82) of the second portion, the so-called rear portion further including thermal insulation means (93).

6. The device according to any of claims 1 to 5, the means (28) for closing or opening the casing including or containing electric connection means between the first portion (18), the so-called front portion and the second portion, the so-called rear portion (8).

7. The device according to any of claims 1 to 6, the second portion, the so-called rear portion (8), containing means (12) for processing a signal in order to produce an image on the screen (6).

8. The device according to any of claims 1 to 7, side portions (83, 87, 89) of the second portion, so called rear portion, being openworked or completely open.

9. The device according to any of claims 1 to 8, the rear face (84) of the second portion comprising means (840) for attaching peripheral means, for example at least one battery.

10. The device according to any of claims 1 to 9, the means for closing or for opening the casing allowing a rotation of the first portion and the second portion of the casing about an axis defined by hinges (28) on one of the sides (85, 185) of the casing.

11. The device according to any of claims 1 to 10, said front face (82) of the second portion (8) including at least one second screen (830) and/or one keyboard (931).

12. The device according to any of claims 1 to 10, further including at least one second screen and/or keyboard (932, 932', 932", 830) retractable in the closed position in the casing (8, 18), and being able to be in the open position beyond a side face (87, 89) of the device.

13. The device according to claim 12, the closed position of the second screen and/or keyboard (932, 932', 932", 830) being in a position parallel to one of the sides of the device, this second screen and/or keyboard being mounted in a position of rotation about an axis parallel to one of said sides.

14. Motion picture equipment, optionally digital, including a camera (4) and a device according to any of claims 1 to 13.
